Europäisches Patentamt

(19) European Patent Office

Office européen des brevets

(11) Numéro de publication: **0 013 037**

**A1**

(12) ## DEMANDE DE BREVET EUROPEEN

(21) Numéro de dépôt: **79200660.3**

(22) Date de dépôt: **09.11.79**

(51) Int. Cl.³: **B 65 G 61/00**
**B 65 G 57/30**

(30) Priorité: **20.12.78 BE 57501**

(43) Date de publication de la demande:
**09.07.80 Bulletin 80/14**

(84) Etats Contractants Désignés:
**AT CH DE FR GB IT LU NL SE**

(71) Demandeur: **BOUWMATERIALEN SERNEELS & Co**
**Itegemsesteenweg 94**
**B-2270 Herenthout(BE)**

(72) Inventeur: **Serneels, Alfons**
**Itegemsesteenweg 90**
**B-2270 Herenthout(BE)**

(74) Mandataire: **Bockstael, Daniel et al,**
**M.F.J. Bockstael Arenbergstraat 13**
**B-2000 Anvers(BE)**

(54) **Procédé pour l'empilement de blocs de construction ou similaires et dispositif pour sa mise en oeuvre.**

(57) La présente invention a trait à un procédé pour l'empilement de blocs de construction disposés en groupes en une seule rangée, caractérisé en ce que successivement un premier groupe de blocs de construction (1) est déposé sur un deuxième groupe (2), les groupes ainsi superposés (1-2) sont déposés sur un troisième groupe (3), les trois groupes ainsi superposés (1-2-3) sont déposés sur un quatrième groupe (4), et ainsi de suite, le ou les groupes de blocs de construction étant déplacés sur une hauteur légèrement supérieure à la hauteur d'un bloc de construction individuel (8) et l'empilement des divers groupes de blocs s'effectuant en les déplaçant toujours dans le même sens après le soulèvement d'un ou de plusieurs groupes.

Fig.3

EP 0 013 037 A1

- 1 -

Procédé pour l'empilement de blocs de construction ou similaires et dispositif pour sa mise en oeuvre.

La présente invention a trait à un procédé pour l'empilement de blocs de construction ou similaires, ainsi qu'à un dispositif pour la mise en oeuvre de ce procédé.

L'invention se rapporte, en particulier, à un procédé et un dispositif pour l'empilement de blocs de construction ou similaires, qui lors de leur façonnage sont, de manière connue, disposés en rangées, dont chaque rangée se compose de plusieurs groupes de blocs de construction équidistants, tels que par exemple des groupes comportant deux ou plusieurs rangées d'un nombre déterminé (par exemple cinq) blocs de construction.

On sait également que ces blocs de construction sont, après leur durcissement partiel ou total, traités pour en former des piles faciles à manutentionner. Il va de soi que ces piles sont formées soit sur le sol, soit sur des palettes selon que lesdits groupes de blocs de construction sont, après le façonnage des blocs, disposés sur le sol ou sur une palette.

Suivant les procédés connus et appliqués jusqu'à présent lesdits groupes de blocs de construction sont repris par une empileuse, qui, par exemple pour empiler cinq groupes de blocs de construction, doit exécuter quatre fois un mouvement de va-et-vient au-dessus de la rangée de blocs de construction concernée, et cela de manière que le groupe médian de cinq groupes déterminés est laissé en place, tandis que les deux groupes de blocs de construction, situés de part et d'autre de ce groupe médian, sont soulevés l'un après l'autre par la machine pour les déposer sur le groupe médian en vue de la formation d'une pile haute de cinq groupes.

Inutile de souligner que ce procédé connu est fort laborieux et peu économique, par suite du fait qu'on est obligé d'exécuter un mouvement de va-et-vient deux fois d'un côté et deux fois de l'autre côté du groupe médian pour former la pile voulue.

Or, la présente invention se propose de remédier à l'inconvénient susmentionné du système connu et préconise à cet effet un nouveau système, c'est-à-dire un procédé et un dispositif, caractérisé en ce que l'empileuse, partant de l'une des extrémités d'une rangée de blocs de construction, se déplace au-dessus de cette dernière pour reprendre successivement les groupes de blocs de construction et les déposer chaque fois sur un groupe suivant, après quoi les deux groupes ainsi superposés sont disposés sur un troisième groupe, les trois groupes ainsi superposés sont disposés sur un quatrième groupe et finalement les quatre groupes ainsi superposés sont disposés sur un cinquième groupe de manière à former la pile désirée, composée de cinq couches de blocs.

Il va sans dire que le système selon l'invention défini ci-dessus présente, par rapport au système traditionnel, le grand avantage d'un gain de temps considérable grâce au fait que l'empileuse selon l'invention peut chaque fois continuer son mouvement sans devoir faire marche arrière.

Les caractéristiques et avantages du système selon l'invention ressortiront plus clairement de la description détaillée

suivante, d'une part, du procédé selon l'invention et, d'autre part, du dispositif destiné à la mise en oeuvre de ce procédé. Cette description est illustrée par les dessins annexés, où

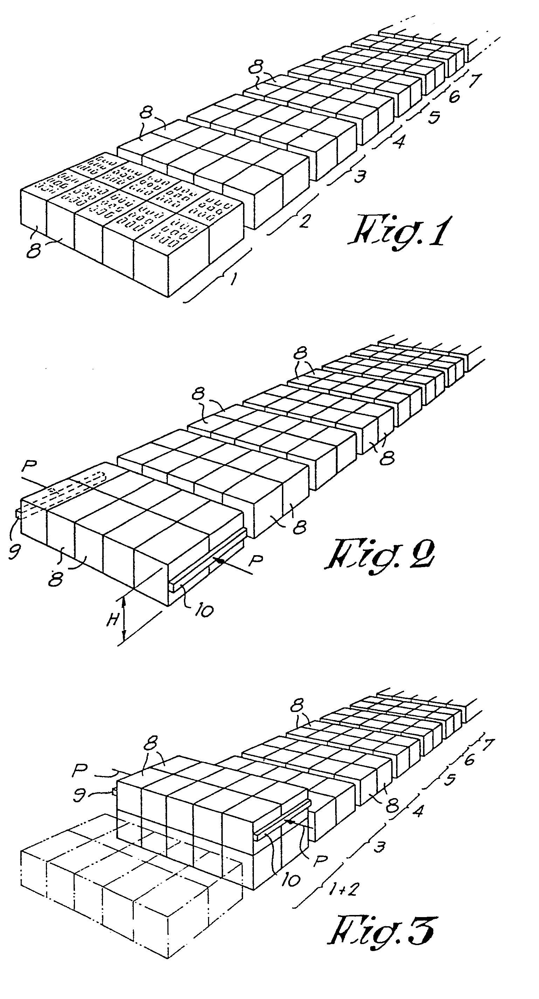

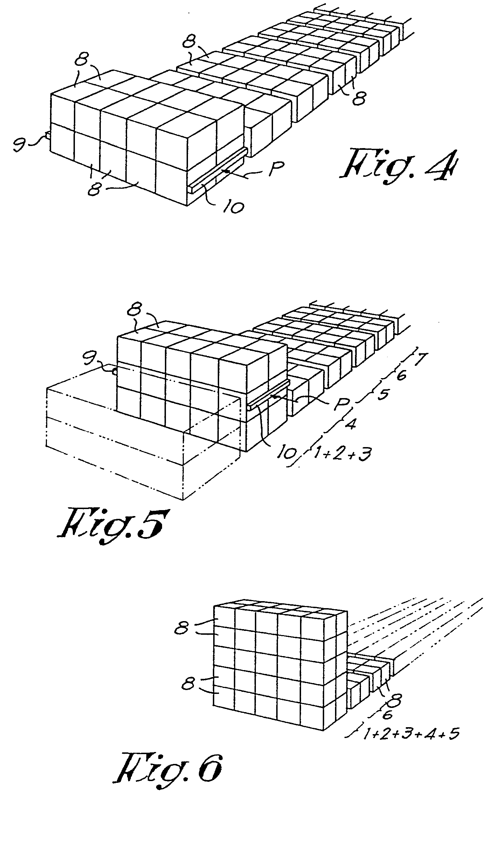

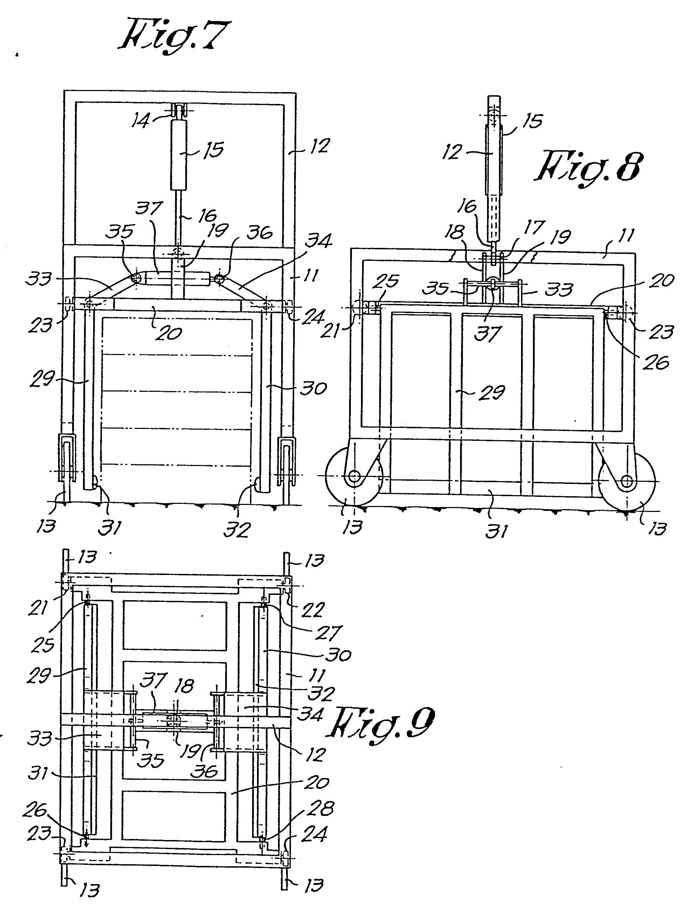

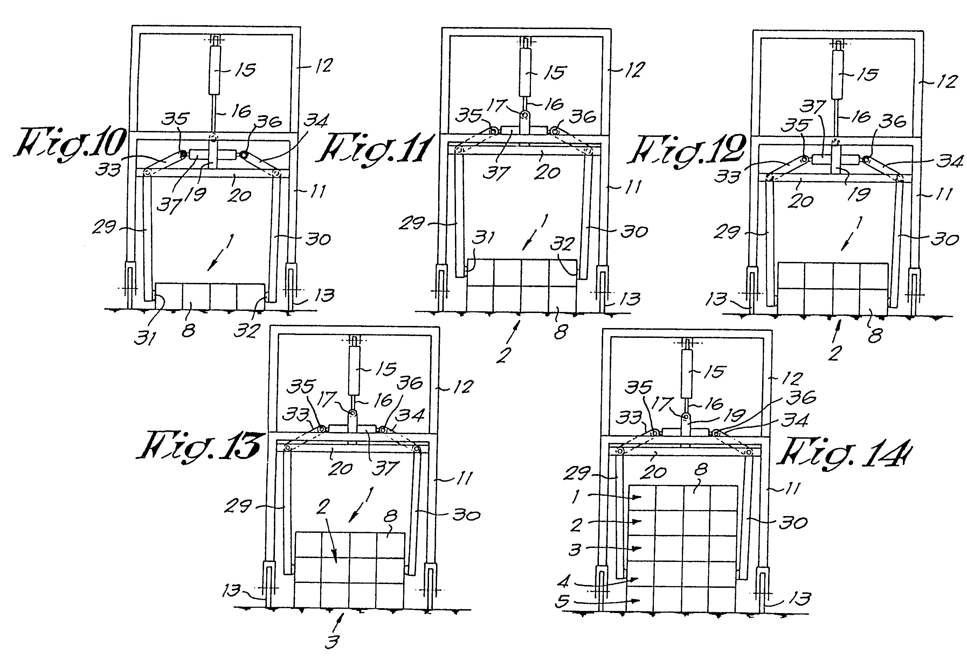

les figures 1-6 représentent de manière schématique le système selon l'invention en perspective; la figure 7 représente une vue d'en face du dispositif selon l'invention; les figures 8 et 9 représentent respectivement une vue latérale et une vue d'en dessus du dispositif selon la figure 7; et les figures 10-14 illustrent en vues d'en face le procédé selon l'invention mis en oeuvre avec un dispositif selon les figures 7-9.

La figure 1 représente de manière schématique une rangée de blocs de construction, composée de groupes de blocs $\underline{1}$, $\underline{2}$, $\underline{3}$, $\underline{4}$, $\underline{5}$, $\underline{6}$, $\underline{7}$, etc., qui, en l'occurrence, comportent dix blocs de construction $\underline{8}$, disposées dans l'ordre illustré par une façonneuse connue en soi, qui forme et dépose les blocs sur place.

Le procédé selon l'invention consiste en ce qu'après le durcissement partiel ou total des blocs de construction $\underline{8}$, le premier groupe de blocs $\underline{1}$ est soulevé de manière appropriée en y exerçant une pression $\underline{P}$ au moyen d'éléments appropriés, tels que les éléments $\underline{9}$ et $\underline{10}$, en ce que ce groupe $\underline{1}$ est déplacé verticalement jusqu'à une hauteur légèrement supérieure à la hauteur $\underline{H}$ d'un groupe de blocs de construction et en ce que lesdits éléments $\underline{9}$ et $\underline{10}$ se déplacent parallèlement à l'axe longitudinal de la rangée de blocs de manière à amener ce groupe $\underline{1}$ exactement au-dessus du groupe $\underline{2}$, après quoi lesdits éléments $\underline{9}$ et $\underline{10}$ se déplacent vers le bas jusqu'à ce que le groupe $\underline{1}$ vient se disposer sur le groupe $\underline{2}$, comme le montre la figure 3. La pression exercée sur le groupe $\underline{1}$ au moyen des éléments $\underline{9}$ et $\underline{10}$ est alors supprimée pour permettre à ces éléments 9 et 10 de se déplacer jusqu'à ce qu'ils se trouvent en regard des blocs de construction 8 du groupe 2, après quoi les blocs du groupe 2 sont sollicités par ladite pression P, et les groupes 1 et 2 sont déplacés verticalement vers le haut sur une hauteur légèrement supérieure à la hauteur H susmentionnée et sont déposés sur ledit groupe 3 au moyen des éléments 9 et 10.

A ce stade, le déplacement des éléments 9 et 10 doit se répéter encore deux fois, ce qui signifie que ces éléments 9 et 10 s'éloignent du groupe 2, se placent en regard du groupe 3 et, après avoir exercé une certaine pression sur les blocs de ce groupe 3, se déplacent vers le haut pour se mettre en contact avec le groupe 4, après quoi l'opération se répète une dernière fois pour former une pile du genre représenté par la figure 6. A partir de ce moment le traitement selon l'invention se poursuit : soulèvement des blocs de construction 7 et leur disposition sur le groupe 7 + 1, et ainsi de suite.

Comme on le voit facilement, le système selon l'invention permet de commencer au début d'une rangée de blocs et de continuer toujours dans le même sens pour former la pile de blocs désirée, ce qui présente le grand avantage d'un gain de temps considérable par rapport au système traditionnel, qui exige un mouvement de va-et-vient constamment répété.

Les figures 8 et 9 représentent de manière schématique un dispositif pour la mise en oeuvre du procédé décrit ci-dessus.

Ce dispositif comporte essentiellement un châssis 11, portant en son milieu un portique 12 et supporté, suivant le présent mode d'exécution, par deux galets 13, coopérant avec un guidage non figuré.

Il va sans dire que lesdits galets sont soit des galets à rotation libre, soit des galets dont au moins un des deux est un galet commandé au moyen d'un dispositif de commande simple et efficace, comportant un pignon à chaîne calé sur l'arbre du galet concerné et accouplé à l'arbre moteur au moyen d'une chaîne, le cas échéant par l'entremise d'un réducteur de vitesse.  Le moteur de commande concerné est de préférence monté sur ledit châssis 11.

Audit portique 12 est articulé au moyen d'un pivot 14 et à pivotement libre un cylindre hydraulique ou pneumatique 15, dont la tige de piston 16 est accouplée au moyen d'un pivot 17 à des supports 18 et 19, auxquels est suspendu un châssis horizontal 20, qui est équipé à chacun de ses quatre coins d'un galet, respectivement 21, 22, 23 et 24, galets destinés à son guidage lors de son déplacement vertical par rapport audit châssis 11.

A ce châssis horizontal 20 sont en outre suspendus au moyen de pivots, respectivement 25, 26 et 27, 28, des cadres verticaux oscillants, respectivement 29 et 30, qui sont munis vers le bas d'une butée, respectivement 31 et 32, destinée à saisir lesdits groupes de blocs de construction.

Chacun des deux cadres 29 et 30 est prolongé vers le haut par un élément, respectivement 33 et 34, connecté, d'une part, au corps et, d'autre part, à la tige de piston d'un cylindre hydraulique ou pneumatique 37.

Le fonctionnement et la conduite du dispositif selon l'invention, décrits dans les lignes précédentes, sont des plus simples et se laissent décrire de la manière suivante avec référence surtout aux figures 10 et 14, qui illustrent le procédé selon l'invention, illustré de manière schématique par les figures 1-6 et mis en oeuvre, en l'occurrence, au moyen d'un dispositif selon les figures 7 et 9.

Il est à noter que les éléments 9 et 10 décrits à l'aide des figures 1-6 correspondent aux éléments 31 et 32 du dispositif concerné.

Comme le montrent clairement les figures, la tige de piston
du cylindre 15 sera retirée et puis de nouveau repoussée
pour déplacer alternativement les éléments de serrage 31 et
32 de leur position à mi-hauteur d'un groupe de blocs de
construction par rapport au sol jusqu'à une hauteur légèrement supérieure à 1,5 fois celle des blocs, et vice versa,
tandis que la tige de piston du cylindre 37 est alternativement retirée et repoussée pour presser les éléments 31 et
32 latéralement contre les blocs en vue de leur soulèvement
et leur disposition, après le déplacement du mécanisme, par
dessus la rangée de blocs sur un groupe suivant.

Pendant la commande du cylindre 15, les châssis ou cadres
20, 29 et 30 se déplacent donc verticalement par rapport au
châssis 11, dont les galets 21-24 servent à guider ces châssis ou cadres 20, 29 et 30 par rapport au châssis 11, tandis que la commande du cylindre 37 provoque le pivotement
des cadres 29 et 30 autour de leurs pivots, respectivement
25, 26 et 27, 28, les bras 29 et 30 étant pour ainsi dire
indépendants l'un de l'autre, grâce à la suspension libre du
cylindre 37, de sorte que, si la machine selon l'invention
ne se trouve pas en une position symétrique au-dessus du
groupe de blocs de construction concerné, un des châssis
ou cadres 29 et 30 peut pivoter d'un angle supérieur à celui
de l'autre, ce qui assure une intervention efficace sur les
blocs dans toutes les circonstances.

Il va de soi que l'invention ne se limite pas au mode d'exécution décrit dans les lignes précédentes et illustré par
les dessins annexés, mais en prévoit de nombreuses modifications, additions et adaptations, évidemment à condition
de ne pas dépasser son cadre, délimité par les revendications formulées ci-après.

Revendications.

1.- Procédé d'empilement de blocs de construction, disposés en groupes dans une rangée, caractérisé en ce qu'il comporte le soulèvement et déplacement d'un premier groupe de blocs de construction (1) sur une hauteur légèrement supérieure à celle des blocs de construction (8); la mise du premier groupe (1) dans la même rangée au-dessus du deuxième groupe (2); le dépôt dudit premier groupe (1) sur ledit deuxième groupe (2); le soulèvement de l'ensemble de ces deux groupes superposés (1-2) et son déplacement sur une hauteur légèrement supérieure à celle d'un bloc de construction (8); le dépôt de l'ensemble de ces deux groupes superposés (1-2) sur le troisième groupe (3) de la même rangée; le soulèvement du troisième groupe de blocs de construction (3) et son déplacement sur une hauteur légèrement supérieure à la hauteur d'un bloc de construction (8); le dépôt de l'ensemble des trois premiers groupes superposés (1-2-3) sur le quatrième groupe (4); le soulèvement de l'ensemble des quatre premiers groupes (1-2-3-4) ainsi superposés et son déplacement d'une hauteur légèrement supérieure à la hauteur d'un bloc de construction (8); et finalement le dépôt de l'ensemble des quatre groupes superposés (1-2-3-4) sur le cinquième groupe (5); l'empilement des divers groupes (1 à 5) s'effectuant, après le soulèvement d'un ou de plusieurs groupes, toujours par déplacement dans le même sens.

2.- Procédé selon la revendication 1, caractérisé en ce que le soulèvement du ou des groupes de blocs de construction s'effectue chaque fois par l'enserrage du groupe de blocs inférieur.

3.- Procédé selon l'une des revendications précédentes, caractérisé en ce que les blocs de construction (8) sont saisis et soulevés aux bords latéraux de chaque groupe qui correspondent à ceux de la rangée de groupes.

4.- Dispositif pour la mise en oeuvre du procédé selon une ou plusieurs des revendications précédentes, caractérisé en ce qu'il se compose essentiellement d'un châssis en U (11) porté par des galets (13) en vue du déplacement de la machine par-dessus une rangée de blocs de construction; d'un portique (12) monté sur ce châssis (11), auquel est suspendu un deuxième châssis (20), qui est horizontal, capable de se déplacer verticalement et guidé par rapport audit châssis en U (11), en ce que de part et d'autre de ce châssis horizontal (20) est suspendu un cadre vertical oscillant (29-30), et en ce que ces deux cadres (29-30) sont disposés à une distance mutuelle légèrement supérieure à la largeur d'un groupe de blocs de construction à traiter et sont mutuellement accouplés au moyen d'un cylindre hydraulique ou pneumatique (37), cadres verticaux dont la longueur, mesurée entre leur point de suspension (axe d'oscillation) (25-26-27-28) et leur extrémité inférieure libre, est à peu près égale à la hauteur de la plus haute pile de blocs de construction à former.

5.- Dispositif selon la revendication 4, caractérisé en ce que ledit châssis horizontal (20) est suspendu audit portique (12) par l'entremise d'un cylindre hydraulique ou pneumatique (15).

6.- Dispositif selon la revendication 4, caractérisé en ce que lesdits cadres verticaux oscillants (29-30) sont, au-dessus dudit châssis horizontal (20) auquel ils sont suspendus, prolongés par des allonges (33-34) faisant office de leviers, connectés entre eux par l'entremise dudit cylindre hydraulique ou pneumatique (37).

7.- Dispositif selon l'une ou l'autre des revendications 4-6, caractérisé en ce que ledit châssis horizontal (20) est à chacun de ces coins muni d'un galet (21-22-23-24), qui coopère avec un des montants dudit châssis en U (11).

0013037

8.- Dispositif selon l'une ou l'autre des revendications 4-7, caractérisé en ce qu'au moins un de ses galets (21 à 24) est un galet commandé.

0013037

Fig.1

Fig.2

Fig.3

0013037

*Fig. 4*

*Fig.5*

*Fig.6*

0013037

**Fig.7**

**Fig.8**

**Fig.9**

Fig.10

Fig.11

Fig.12

Fig.13

Fig.14

))) Office européen des brevets

**RAPPORT DE RECHERCHE EUROPEENNE**

EP 79 20 0660

| Catégorie | Citation du document avec indication, en cas de besoin, des parties pertinentes | Revendication concernée |
|---|---|---|
| | **DOCUMENTS CONSIDERES COMME PERTINENTS** | |
| A | <u>CH - A - 476 616</u> (OTT) <br> * Ensemble * | 1 |
| | <u>GB - A - 1 245 974</u> (CLARK) <br> * Revendication 1; page 3, lignes 51-64; page 3, lignes 93-130; page 4, lignes 1-30; figures 1-4 * | 1-6 |
| | <u>GB - A - 1 375 042</u> (BRITISH LELY) <br> * Page 1, lignes 11-24; page 5, lignes 118-130; page 6, lignes 1-64; figures 1,3-5 * | 1-3 |
| | <u>US - A - 3 278 055</u> (STOLTZ) <br> * Colonne 5, lignes 30-55; colonne 3, lignes 47-55; figures 12,1 * | 1-3 |
| | <u>FR - A - 2 220 448</u> (OTT) <br> * Page 2, lignes 36-40; page 3, lignes 1-33; figures 1-4 * | 1,4,5 |
| | <u>DE - B - 1 303 138</u> (OTT) <br> * Colonne 3, lignes 40-61; colonne 4; figures 1-3 * | 4,5, 7,8 |

**CLASSEMENT DE LA DEMANDE (Int. Cl. ³)**

B 65 G 61/00
57/30

**DOMAINES TECHNIQUES RECHERCHES (Int. Cl. ³)**

B 65 G
B 66 C
B 66 F
A 01 D
B 28 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été etabli pour toutes les revendications

| Lieu de la recherche | Date d'achevement de la recherche | Examinateur |
|---|---|---|
| La Haye | 28-02-1980 | OSTIJN |

OEB Form 1503.1   06.78